# EUROPÄISCHE PATENTANMELDUNG

(11) **EP 1 501 170 A1**
(43) Veröffentlichungstag der Anmeldung: **26.01.2005**
(21) Anmeldenummer: 04012018.0
(22) Anmeldetag: 21.05.2004
(51) Int. Cl.: H02K 5/04, H02K 15/14

(54) **Elektrische Maschine mit Statorbefestigung**

(30) Priorität: 21.07.2003 DE 10332957
(71) Anmelder: ROBERT BOSCH GMBH, 70442 Stuttgart (DE)
(72) Erfinder: Wehrle, Andreas, 77770 Durbach (DE)

(57) **Zusammenfassung**

Die vorliegende Erfindung betrifft eine elektrische Maschine, umfassend ein Gehäuse (2), einen Stator (4) und einen Rotor (5), wobei das Gehäuse (2) wenigstens einen nach innen vorstehenden Bereich (3) aufweist, um den Stator (4) im Inneren des Gehäuses (2) zu klemmen.

## Beschreibung

### Stand der Technik

Die vorliegende Erfindung betrifft eine elektrische Maschine, umfassend ein Gehäuse, einen Stator und einen Rotor und betrifft insbesondere eine verbesserte Befestigung des Stators am Gehäuse.

Elektrische Maschinen werden als Motoren oder Generatoren in vielen Bereichen, wie beispielsweise als elektrische Hilfsantriebe in Fahrzeugen, eingesetzt. Bei permanenterregten elektrischen Maschinen werden in der Großserienfertigung die Statoren üblicherweise im Gehäuse (Poltopf) eingeklebt. Die Statoren bestehen üblicherweise aus mehreren aufeinander geschichteten Einzelblechen, welche miteinander über an einer Seite vorstehenden Nasen und an der gegenüber liegenden Seite mit eingeprägten Sacklöchern miteinander geschichtet bzw. verpresst werden. Da die Statoren aus gestanzten Blechen hergestellt sind, weisen sie an ihren Stanzkanten scharfkantige Grate auf. Es hat sich dabei gezeigt, dass bei Versuchen, das Statorpaket in ein zylindrisches Gehäuse einzupressen, aufgrund der Summe der Herstelltoleranzen einerseits höchste Einpresskräfte erforderlich sind und andererseits sich während des Einpressens metallische Späne von den scharfkantigen Graten des Stators lösen können. Diese Späne sorgen einerseits für eine Deformation der Bauteile und andererseits können lose Späne im inneren der elektrischen Maschine zu einem vorzeitigen Ausfall führen. Um daher eine ausreichende Prozesssicherheit garantieren zu können, werden die Statoren heutzutage mittels Kleben mit dem Gehäuse der elektrischen Maschine verbunden.

### Vorteile der Erfindung

Die erfindungsgemäße elektrische Maschine mit den Merkmalen des Anspruchs 1 weist demgegenüber den Vorteil auf, dass sie auf eine Klebeverbindung zwischen dem Gehäuse und dem Stator verzichten kann. Dadurch können die erfindungsgemäßen elektrischen Maschinen aufgrund des Fehlens des Klebstoffs in höheren Temperaturbereichen betrieben werden. Erfindungsgemäß wird zwischen dem Gehäuse der elektrischen Maschine und dem Stator eine mechanische und wärmestabile Verbindung ausgeführt. Hierbei weist das Gehäuse wenigstens einen nach innen vorstehenden Bereich auf, sodass der Stator im Inneren des Gehäuses mittels des nach innen vorstehenden Bereichs geklemmt wird. Da der nach innen vorstehende Bereich an der inneren Mantelfläche des Gehäuses örtlich begrenzt ist, kann der Stator am Mantelinnenbereich des Gehäuses geklemmt werden. Weiterhin ergibt sich durch den Pressverbund zwischen dem Stator und dem Gehäuse über einen großen Toleranzbereich eine annähernd konstante Einpresskraft. Erfindungsgemäß können dabei größere Toleranzen hingenommen werden, als bei der herkömmlichen Verbindungsmethode mittels Kleben. Weiterhin ist es erfindungsgemäß nicht notwendig, das Statorpaket bzw. die Statorbleche spanend nachzubearbeiten, um eventuelle Späne zu entfernen bzw. die Statortoleranz zu verringern.

Die Unteransprüche haben bevorzugte Weiterbildungen der Erfindung zum Gegenstand.

Vorzugsweise weist das Gehäuse zwei nach innen vorstehende Bereiche auf. Dabei ist der Stator im Gehäuse dann mittels der beiden nach innen vorstehenden Bereiche und einer inneren Mantelfläche des Gehäuses geklemmt. Somit ist der Stator an drei Abschnitten entlang seines Außenumfangs sicher befestigt.

Gemäß einer anderen bevorzugten Ausgestaltung der vorliegenden Erfindung ist der Stator ausschließlich mittels nach innen vorstehender Bereiche des Gehäuses befestigt.

Besonders bevorzugt sind die nach innen vorstehenden Bereiche entlang des Umfangs des Gehäuses gleich weit voneinander beabstandet. Dadurch wird erreicht, dass die Klemmkraft auf den Stator gleichmäßig verteilt ist.

Gemäß einer weiteren bevorzugten Ausgestaltung der vorliegenden Erfindung ist zwischen dem Stator und dem inneren Mantelbereich des Gehäuses ein mantelförmiges Zwischenelement angeordnet, welches den Stator vorzugsweise vollständig umschließt. Dadurch kann der Stator zuerst in das mantelförmige Zwischenelement und anschließend gemeinsam mit dem mantelförmigen Zwischenelement in das Gehäuse der elektrischen Maschine eingeführt werden.
Dadurch kann eine Spanbildung während des Einpressvorgangs mit Sicherheit reduziert werden.

Vorzugsweise weist das mantelförmige Zwischenelement in Umfangsrichtung einen sich überlappenden Bereich auf. Gemäß einer anderen bevorzugten Ausgestaltung der Erfindung ist das mantelförmige Zwischenelement derart ausgebildet, dass es keinen überlappenden Bereich, sondern eine Stoßkante aufweist. Das mantelförmige Zwischenelement kann dabei am überlappenden Bereich bzw. an der Stoßkante z.B. mittels Schweißen miteinander verbunden werden.

Um eine einfachere Einführung des mantelförmigen Zwischenelements in das Gehäuse zu ermöglichen, weist das mantelförmige Zwischenelement vorzugsweise einen sich verjüngenden, insbesondere konischen, Bereich auf.

Besonders bevorzugt sind die nach innen vorstehenden Bereiche durch am Außenbereich des Gehäuses gebildeten Sicken hergestellt. Dabei verlaufen die Sicken vorzugsweise in Axialrichtung des Gehäuses, besonders bevorzugt über die gesamte axiale Länge des Stators oder es sind mehrere kürzere, hintereinander oder in Umfangsrichtung versetzt zueinander angeordnete Sicken vorgesehen.

Vorzugsweise ist das mantelförmige Zwischenelement aus Federstahl hergestellt.

Weiter bevorzugt sind die nach innen vorstehenden Bereiche des Gehäuses gehärtet oder an den nach innen vorstehenden Bereichen des Gehäuses ist eine zusätzliche Hartschicht aufgebracht. Das Härten kann beispielsweise durch Nitrierhärten, Flammhärten oder Induktionshärten ausgeführt werden, wobei vorzugsweise nicht die gesamte Innenfläche des Gehäuses gehärtet wird, sondern ausschließlich die vorstehenden Bereiche.

Besonders bevorzugt ist das Gehäuse der elektrischen Maschine topfförmig ausgebildet.

Die erfindungsgemäße elektrische Maschine ist vorzugsweise ein EC-Motor oder ein EC-Generator und wird besonders bevorzugt in Fahrzeugen, insbesondere als Hilfsantrieb für Komforteinrichtungen, wie beispielsweise elektrische Fensterheber, elektrische Schiebedächer, Scheibenwischermotor o.ä., eingesetzt. Dadurch können die herstellungsbedingten Vorteile der erfindungsgemäßen elektrischen Maschine aufgrund der Massenfertigung besonders gut ausgenutzt werden, sodass sich erhebliche Kostenvorteile im Vergleich mit dem Stand der Technik ergeben.

### Zeichnung

Nachfolgend wird unter Bezugnahme auf die begleitende Zeichnung ein Ausführungsbeispiel einer elektrischen Maschine gemäß der vorliegenden Erfindung beschrieben. In der Zeichnung ist:
- Figur 1: eine schematische Längsschnittansicht einer elektrischen Maschine gemäß einem ersten Ausführungsbeispiel der vorliegenden Erfindung,
- Figur 2: eine schematische Querschnittsansicht der in Figur 1 gezeigten elektrischen Maschine,
- Figur 3: eine schematische Querschnittsansicht einer elektrischen Maschine gemäß einem zweiten Ausführungsbeispiel der vorliegenden Erfindung,
- Figur 4: eine schematische Querschnittsansicht einer elektrischen Maschine gemäß einem dritten Ausführungsbeispiel der vorliegenden Erfindung,
- Figur 5: eine schematische Querschnittsansicht einer elektrischen Maschine gemäß einem vierten Ausführungsbeispiel der vorliegenden Erfindung, und
- Figur 6: eine schematische Querschnittsansicht einer elektrischen Maschine gemäß einem fünften Ausführungsbeispiel der vorliegenden Erfindung.

### Beschreibung der Ausführungsbeispiele

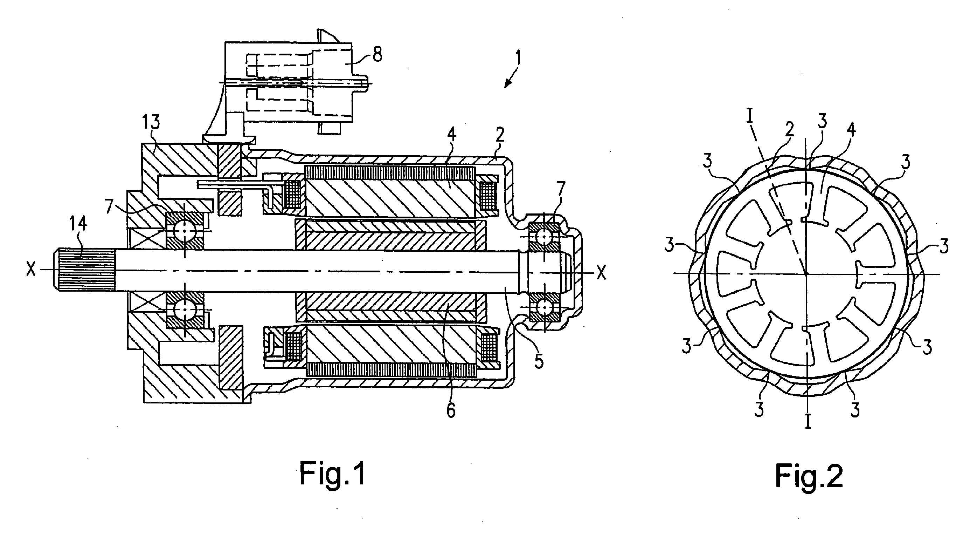

Nachfolgend wird unter Bezugnahme auf die Figuren 1 und 2 eine elektrische Maschine 1 gemäß einem ersten Ausführungsbeispiel der vorliegenden Erfindung beschrieben. Die elektrische Maschine 1 ist ein EC-Motor, welcher in einem Fahrzeug verwendet wird. Figur 1 ist eine Schnittansicht entlang der Linie I-I von Figur 2.

Die elektrische Maschine 1 umfasst ein Gehäuse 2, einen Stator 4, eine Rotorwelle 5 mit einem darauf angeordneten Permanentmagnet 6, und einen elektrischen Steckanschluss 8. Die Rotorwelle ist an ihren beiden entgegengesetzten Enden an zwei Lagern 7 gelagert. Der Stator 4 umfasst eine Isolierung sowie eine Sensorik und Wicklung in bekannter Weise. Das Gehäuse 2 ist topfförmig ausgebildet und ist an seiner offenen Seite mit einem Deckelelement 13 verschlossen. Das Drehmoment der Rotorwelle 5 kann über eine aus der elektrischen Maschine 1 vorstehende, integral auf der Rotorwelle gebildete Verzahnung 14 abgenommen werden.

Figur 2 stellt die Verbindung zwischen dem Gehäuse 2 und dem Stator 3 im Detail dar. Zur besseren Übersichtlichkeit sind in Figur 2 die Wicklungen des Stators 4 nicht dargestellt. Wie aus Figur 2 ersichtlich ist, sind am Gehäuse 2 an dessen Außenumfang eine Vielzahl von Längssicken ausgebildet, sodass am inneren Mantelumfang des Gehäuses 2 nach innen vorstehende Bereiche 3 ausgebildet werden. In dem in den Figuren 1 und 2 gezeigten Ausführungsbeispiel sind genau neun vorstehende Bereiche 3 ausgebildet. Die vorstehenden Bereiche 3 verlaufen über die gesamte Länge des zylindrischen Teils des Gehäuses 2 und können einfach bei der Herstellung des Gehäuses 2 mit ausgebildet werden. Der Stator 4 wird nun durch die vorstehenden Bereiche 3 des Gehäuses 2 gehalten, wobei hierbei die vorstehenden Bereiche wie ein Federelement wirken und den Stator 4 im Gehäuse 2 klemmen. Die Klemmkraft ist dabei derart groß, dass der Stator sich nicht relativ zum Gehäuse 2 verdrehen oder in Axialrichtung verschieben kann. Die vorstehenden Bereiche 3 sind am Umfang des Gehäuses 2 jeweils gleich weit voneinander beabstandet, sodass eine gleichmäßige Klemmkraft auf den Stator 4 ausgeübt wird.

Durch die erfindungsgemäße Formgestaltung des Gehäuses 2 kann somit der Stator 4 ohne Kleben im Gehäuse 2 befestigt werden. Dabei muss das Statorblechpaket nicht nachbearbeitet werden, da die erfindungsgemäße Ausgestaltung des Gehäuses 2 es erlaubt, dass größere Toleranzen durch das Gehäuse 2 aufgenommen werden können, ohne dass dadurch Nachteile im Betrieb der elektrischen Maschine, wie beispielsweise ein zentrischer Fehler, auftreten. Da das Gehäuse 2 vorzugsweise aus einem Federstahlblech hergestellt ist, kann die erfindungsgemäße elektrische Maschine in höheren Temperaturbereichen als Maschinen, bei denen der Stator in das Gehäuse eingeklebt ist, betrieben werden. Dabei ist die erfindungsgemäße elektrische Maschine 1 durch Wegfall des Klebeschritts weiterhin auch schneller und kostengünstiger herstellbar bzw. montierbar.

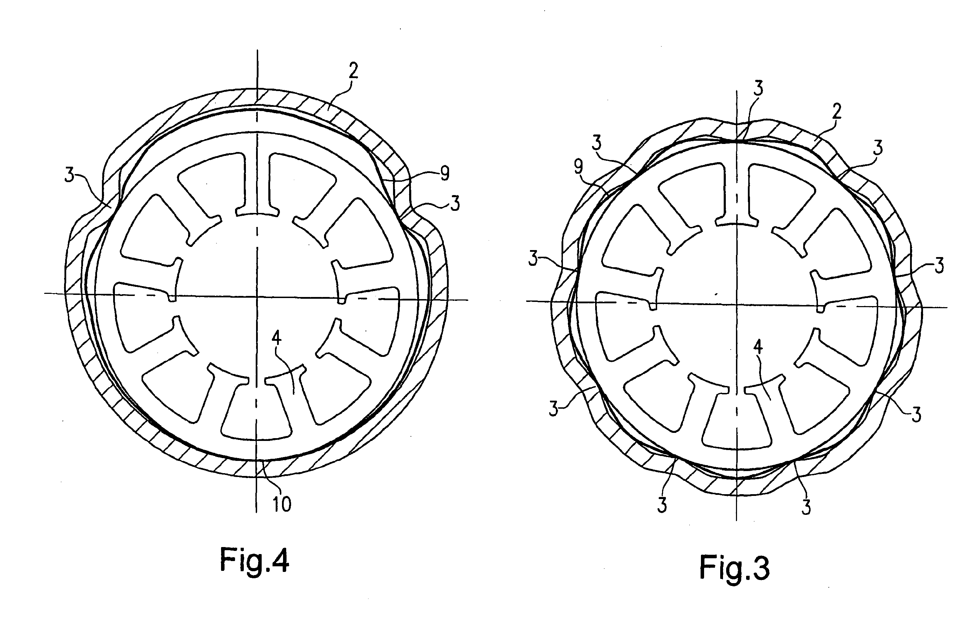

Figur 3 zeigt eine elektrische Maschine gemäß einem zweiten Ausführungsbeispiel der vorliegenden Erfindung, wobei gleiche bzw. funktional gleiche Teile mit den gleichen Bezugszeichen wie im ersten Ausführungsbeispiel bezeichnet sind.

Im Unterschied zum ersten Ausführungsbeispiel ist beim zweiten Ausführungsbeispiel zusätzlich noch ein mantelförmiges Zwischenelement 9 zwischen dem Gehäuse 2 und dem Stator 4 angeordnet. Das mantelförmige Zwischenelement 9 weist eine im Wesentlichen rohrförmige Gestalt auf und umschließt den Stator 4 vollständig. Zur Montage des mantelförmigen Zwischenelements 9 wird vorzugsweise zuerst der Stator 4 in das mantelförmige Zwischenelement 9 eingeführt und anschließend das mantelförmige Zwischenelement 9 gemeinsam mit dem Stator 4 in das Gehäuse 2 eingepresst. Durch diese Vorgehensweise kann eine Spanbildung beispielsweise durch Abbrechen von Spänen während des Einpressvorgangs des Stators ins Gehäuse vollständig unterbunden werden. Der Stator 4 tritt mit dem Gehäuse 2 nicht mehr in direkten Kontakt. Somit wird das mantelförmige Zwischenelement 9 vorzugsweise für elektrische Maschinen verwendet, bei denen höchste Ausfallsicherheit garantiert werden muss. Ansonsten entspricht das in Figur 3 gezeigte zweite Ausführungsbeispiel dem ersten Ausführungsbeispiel.

Nachfolgend wird unter Bezugnahme auf Figur 4 ein drittes Ausführungsbeispiel der vorliegenden Erfindung beschrieben, wobei wiederum gleiche Teile mit den gleichen Bezugszeichen wie im ersten Ausführungsbeispiel bezeichnet sind.

Das dritte Ausführungsbeispiel weist ebenfalls wie das zweite Ausführungsbeispiel ein mantelförmiges Zwischenelement 9 auf. Im Unterschied zum zweiten Ausführungsbeispiel sind jedoch beim dritten Ausführungsbeispiel nur zwei nach innen vorstehende Bereiche 3 am Gehäuse 2 gebildet. Wie aus Figur 4 ersichtlich ist, wird der Stator 4 dabei zwischen den beiden nach innen vorstehenden Bereichen 3 und einem inneren Mantelbereich 10 des Gehäuses 2 geklemmt. Die beiden nach innen vorstehenden Bereiche 3 liegen dabei um etwa 120° entlang des Umfangs versetzt zueinander, sodass durch den Innenbereich 10 und die vorstehenden Bereiche 3 eine gleichmäßige Klemmkraft aufgebracht wird.

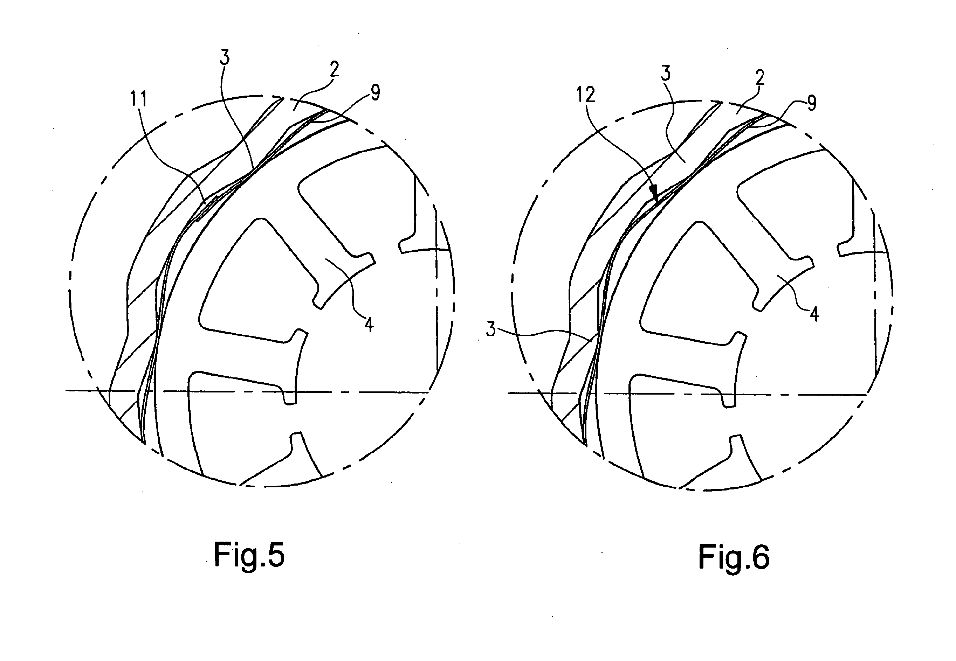

In den Figuren 5 und 6 sind ein viertes bzw. ein fünftes Ausführungsbeispiel mit jeweils einem mantelförmigen Zwischenelement 9 dargestellt. Das mantelförmige Zwischenelement 9 ist aus einem rechteckigen Blechzuschnitt hergestellt. Dabei zeigt das in Figur 5 dargestellte Ausführungsbeispiel einen überlappenden Bereich 11, an welchem sich die beiden in Umfangsrichtung gegenüber liegenden Enden des im Wesentlichen zylinderförmigen Zwischenelements 9 überlappen. Die Überlappung ist dabei in einem Bereich zwischen zwei vorstehenden Bereichen 3 des Gehäuses angeordnet. Dadurch ergeben sich keine nachteiligen Auswirkungen auf die von den vorstehenden Bereichen 3 bereitgestellte Klemmkraft.

Das in Figur 6 gezeigte Ausführungsbeispiel weist ebenfalls das mantelförmige Zwischenelement 9 auf, wobei jedoch anstelle eines überlappenden Bereichs eine Stoßkante 12 zwischen den in Umfangsrichtung liegenden Enden des Zwischenelements 9 ausgebildet ist. Die Stoßkante 12 verbindet die Umfangsenden des Zwischenelements 9 dabei in einer glatten Weise.

Es sei angemerkt, dass die Umfangsenden beispielsweise mittels Schweißen auch fest miteinander verbunden werden können. Die Umfangsenden können beispielsweise mittels Laserschweißen oder auch mittels Kleben zusammengefügt werden. Es ist jedoch nicht zwingend notwendig, die Umfangsenden des Zwischenelements 9 fest miteinander zusammenzufügen.

## Patentansprüche

1. Elektrische Maschine, umfassend ein Gehäuse (2), einen Stator (4) und einen Rotor (5), **dadurch gekennzeichnet, dass** das Gehäuse (2) wenigstens einen nach innen vorstehenden Bereich (3) aufweist, um den Stator (4) im Inneren des Gehäuses (2) zu klemmen.

2. Elektrische Maschine nach Anspruch 1, **dadurch gekennzeichnet, dass** das Gehäuse (2) zwei nach innen vorstehende Bereiche (3) aufweist und der Stator (4) mittels der zwei nach innen vorstehenden Bereiche (3) und eines Innenflächenbereichs (10) des Gehäuses im Gehäuse (2) befestigt ist.

3. Elektrische Maschine nach einem der vorhergehenden Ansprüche, **dadurch gekennzeichnet, dass** der Stator (4) ausschließlich mittels nach innen vorstehender Bereiche (3) des Gehäuses (2) befestigt ist.

4. Elektrische Maschine nach einem der vorhergehenden Ansprüche, **dadurch gekennzeichnet, dass** die nach innen vorstehenden Bereiche (3) entlang des Umfangs des Gehäuses gleich weit voneinander beabstandet sind.

5. Elektrische Maschine nach einem der vorhergehenden Ansprüche, **dadurch gekennzeichnet, dass** zwischen dem Stator (4) und dem Gehäuse (2) ein mantelförmiges Zwischenelement (9) angeordnet ist.

6. Elektrische Maschine nach Anspruch 5, **dadurch gekennzeichnet, dass** das mantelförmige Zwischenelement den Stator (4) vollständig umschließt und einen sich überlappenden Bereich (11) oder einen Stoßkantenbereich (12) aufweist.

7. Elektrische Maschine nach einem der vorhergehenden Ansprüche, **dadurch gekennzeichnet, dass** das mantelförmige Zwischenelement (9) einen sich verjüngenden, insbesondere konisch ausgebildeten Bereich aufweist.

8. Elektrische Maschine nach einem der vorhergehenden Ansprüche, **dadurch gekennzeichnet, dass** die nach innen vorstehenden Bereiche (3) in Axialrichtung (X-X) der elektrischen Maschine über die gesamte axiale Länge des Stators (4) verlaufen.

9. Elektrische Maschine nach einem der vorhergehenden Ansprüche, **dadurch gekennzeichnet, dass** die nach innen vorstehenden Bereiche (3) des Gehäuses gehärtet sind oder dass an den nach innen vorstehenden Bereichen (3) des Gehäuses eine Hartschicht aufgebracht ist.

10. Elektrische Maschine nach einem der vorhergehenden Ansprüche, **dadurch gekennzeichnet, dass** das Gehäuse (2) topfförmig ausgebildet ist.

11. Elektrische Maschine nach einem der vorhergehenden Ansprüche, **dadurch gekennzeichnet, dass** die elektrische Maschine ein EC-Motor oder ein EC-Generator ist.
